# FASCICULE DE BREVET EUROPEEN

(11) **EP 2 026 985 B1**
(45) Date de publication et mention de la délivrance du brevet: **21.04.2010**
(21) Numéro de dépôt: 07725177.5
(22) Date de dépôt: 14.05.2007
(51) Int. Cl.: B60C 15/06

(54) **PNEUMATIQUE AVEC ZONE BASSE COMPORTANT UN ÉLÉMENT DE RENFORT BIÉLASTIQUE**
REIFEN MIT UNTEREM BEREICH MIT EINEM BIELASTISCHEN VERSTÄRKUNGSELEMENT
TYRE WITH LOWER REGION COMPRISING A BIELASTIC REINFORCING ELEMENT

(30) Priorité: 22.05.2006 FR 0604645
(43) Date de publication de la demande: 25.02.2009
(73) Titulaire: Société de Technologie MICHELIN, 63000 Clermont-Ferrand (FR); Michelin Recherche et Technique S.A., 1763 Granges-Paccot (CH)
(72) Inventeur: HUYGHE, Jean-Michel, F-63100 Clermont-Ferrand (FR)
(74) Mandataire: Randl, Oliver Georg
(86) Numéro de dépôt international: PCT/EP2007/004258
(87) Numéro de publication internationale: WO 2007/134744

(56) Documents cités:
- FR-A- 2 864 470
- JP-A- 59 063 207

## Description

L'invention concerne un pneumatique, du type montré par FR-A-2 864 470, comportant au moins un élément de renfort biélastique circonférentiel étant constituée d'un tissu biélastique.

De façon classique, les pneumatiques sont sans cesse soumis à de nombreuses sollicitations mécaniques d'origines diverses, en fonction notamment du type de véhicule, du style de conduite du conducteur, du type d'itinéraire emprunté, de l'état général du réseau routier sur lequel le véhicule évolue, etc. Chacun de ces paramètres a un impact direct ou indirect sur le type et l'intensité des sollicitations et contraintes mécaniques que le pneumatique est amené à subir lors de son utilisation. En outre, la zone basse du pneumatique est particulièrement concernée par ces phénomènes puisque cette zone concentre une grande partie des contraintes, notamment du au fait de la présence du crochet de jante, qui, en étant en contact direct avec la zone basse du pneumatique, engendre une zone de concentration de contraintes.

En conséquence un premier objet de l'invention consiste en un pneumatique comprenant au moins une structure de renfort de type carcasse s'étendant circonférentiellement depuis un bourrelet vers un flanc, ancrée de chaque côté du pneumatique dans un bourrelet dont la base est destinée à être montée sur un siège de jante, ledit ancrage comportant un retournement de ladite structure de renfort de type carcasse autour d'une tringle de façon à former, le long d'une portion radialement intérieure de la tringle, une portion de retournement de la structure de renfort depuis un point axialement intérieur à la tringle vers un point axialement extérieur à celle-ci puis s'étendant radialement extérieurement depuis la base de ladite tringle de façon à former une section retournée se terminant par une extrémité, chaque bourrelet se prolongeant radialement vers l'extérieur par un flanc, les flancs rejoignant radialement vers l'extérieur une bande de roulement, ledit pneumatique comportant par ailleurs au moins un élément de renfort biélastique circonférentiel étant constituée d'un tissus biélastique dans lequel ledit tissu utilisé est un tricot biélastique, soit un tissu à mailles dont les boucles formant les mailles sont susceptibles de se déplacer les unes par rapport aux autres dans le sens du tricotage et dans le sens perpendiculaire au tricotage, ledit au moins un élément de renfort biélastique étant agencé de façon à s'étendre sensiblement parallèlement le long d'une portion de la structure de renfort située dans la zone du bourrelet du pneumatique, axialement extérieurement à la structure de renfort, à proximité immédiate de celle-ci (c'est-à-dire à une distance plus faible de la portion axialement intérieure de la structure de renfort que de la section retournée de ladite structure de renfort). Grâce à une telle mise en oeuvre de l'élément de renfort biélastique, les propriétés mécaniques du pneumatique telles que l'endurance et la résistance aux chocs sont améliorées. L'élément de renfort biélastique procure un effet d'absorption et de diffusion de l'énergie bénéfique à ces propriétés.

L'utilisation d'un élément de renfort biélastique améliore la résistance à la propagation des fissures. L'endurance et la durée de vie des produits peuvent ainsi être améliorées. Une telle architecture est particulièrement avantageuse pour les pneumatiques de type tourisme. En effet, ces pneumatiques sont susceptibles d'être fortement sollicités dans certains types d'utilisation, tel qu'en virage à haute vitesse et/ou dans certains types d'environnement hostiles. La zone basse est alors sujette à de fortes contraintes. La présente invention permet de diminuer les effets néfastes de telles contraintes.

Selon un mode de réalisation avantageux, ledit renfort biélastique s'étend radialement intérieurement, depuis une position radiale correspondant à celle de l'extrémité de la section retournée de la structure de renfort, sur plus de la moitié de la distance radiale séparant ladite extrémité de la portion radialement extérieure de la tringle.

Ledit renfort biélastique s'étend de préférence radialement intérieurement, depuis une position radiale correspondant à celle de l'extrémité de la section retournée de la structure de renfort, sur plus de 70 % (et de manière encore plus préférentielle plus de 85 %) de la distance radiale séparant ladite extrémité de la portion radialement extérieure de la tringle. Selon un exemple de réalisation avantageux, le renfort biélastique s'étend radialement intérieurement d'au minimum cinq mm par rapport à l'extrémité de la structure de renfort de type carcasse (distance D2). Selon ces différents exemples de réalisation, on positionne ainsi l'élément de renfort biélastique en priorité le long de la portion de structure de renfort de type carcasse qui est fortement sollicitée et où un effet de diffusion de l'énergie est particulièrement bénéfique.

Selon un mode de réalisation avantageux, la portion du bourrelet comprise entre les deux sections concourantes de structures de renfort forme une zone de remplissage occupée par un matériau caoutchoutique de remplissage dans lequel la totalité de l'élément de renfort biélastique est logé. Selon un exemple de réalisation avantageux, l'extrémité radialement extérieure de l'élément de renfort biélastique est située à au moins cinq mm de la limite radialement supérieure de la zone de remplissage (distance D1). Le matériau caoutchoutique de remplissage, dû à son haut module, procure de bonnes caractéristiques d'ancrage. En contrepartie, ce type de matériau est plus fragile. La présence de l'élément de renfort biélastique permet d'atténuer ou de compenser ce dernier effet, grâce à un découplage mécanique entre la structure de renfort de type carcasse et la zone de remplissage. Selon un mode de réalisation avantageux, le matériaux de la zone de remplissage comporte un module plus élevé que celui situé à de part et d'autre de cette zone.

Selon un autre mode de réalisation de l'invention, ledit élément de renfort biélastique se prolonge radialement intérieurement de façon à former, le long d'une portion radialement intérieure de la tringle, une portion de retournement de l'élément de renfort biélastique, depuis un point axialement intérieur à la tringle vers un point axialement extérieur à celle-ci puis s'étendant radialement extérieurement depuis la base de ladite tringle jusqu'à une position radiale inférieure ou égale à celle de l'extrémité de la section retournée de structure de renfort.

Selon d'autres formes de réalisation, la portion de retournement de l'élément de renfort biélastique s'étend radialement extérieurement depuis la base de ladite tringle jusqu'à une position radiale supérieure à celle de l'extrémité de la section retournée de structure de renfort.

Selon une variante, l'extrémité de l'élément de renfort biélastique situé du côté de la section retournée de la structure de renfort de type carcasse est située dans la zone de remplissage. Selon un exemple de réalisation avantageux, cette extrémité est située à au moins cinq mm de l'extrémité libre de la section retournée de la structure de renfort de type carcasse (distance D3). Selon ces exemples de réalisation, toute la portion sollicitée de la zone d'ancrage est protégée par la présence de l'élément de renfort biélastique.

La zone de remplissage s'étend de préférence radialement extérieurement au-delà de l'extrémité de la section retournée de structure de renfort.

De manière avantageuse, l'élément de renfort biélastique présente au moins l'une et de préférence l'ensemble des caractéristiques suivantes:
- un taux d'allongement élastique d'au moins 8%,
- une taille de maille inférieure ou égale à 150 mailles par décimètres, et de préférence 200 mailles par décimètres.

L'élément de renfort biélastique comprend de préférence au moins un matériau choisi parmi les polyamides, les polyesters, la rayonne, le coton, la laine, l'aramide, la soie, le lin.

De manière avantageuse, l'élément de renfort biélastique comprend une certaine proportion de fils élastiques.

Egalement de manière avantageuse, l'élément de renfort biélastique présente une épaisseur pouvant se situer entre 0,2 mm et 2 mm, et de préférence entre 0,4 et 1,2 mm.

L'élément de renfort biélastique présente une masse surfacique de préférence généralement située entre 70 et 700 g/m2, et de manière encore plus préférentielle entre 140 et 410 g/m2.

Selon un autre mode de réalisation avantageux, l'élément de renfort biélastique est composée d'au moins un polymère choisi parmi les polymères thermodurcissable, les polymères thermoplastiques.

De manière avantageuse, le tissu utilisé est un tricot biélastique, c'est-à-dire un tissu à mailles dont les boucles formant les mailles sont susceptibles de se déplacer les unes par rapport aux autres dans le sens du tricotage et dans le sens perpendiculaire au tricotage. Par biélastique, on entend que le matériau en question possède des propriétés le rendant élastique dans au moins deux directions sensiblement perpendiculaires, et de préférence dans toutes les directions.

L'utilisation de fibres élastomériques pour réaliser ce tissus ou tricot n'est donc pas indispensable. On peut éventuellement en prévoir en faible proportion pour favoriser la mise en oeuvre et faciliter le retour élastique.

Si toutefois on ne souhaite qu'un découplage mécanique, l'utilisation d'une matrice élastomérique peut permettre d'amplifier la capacité de découplage.

Le terme de tissus biélastique recouvre également des structures qui ont la possibilité de se déformer élastiquement de manière réversible mais qui ne sont pas forcément obtenues par tricotage. II peut s'agir en particulier de structures obtenues au crochet ou des assemblages sous forme de bouclettes ou des aiguilletés.

L'entrelacement des boucles forme un réseau déformable de manière élastique dans deux directions sensiblement perpendiculaires. Dans le cas avantageux où on utilise un tricot biélastique, la capacité de déformation de ce tricot biélastique selon l'invention résulte en particulier de la structure en tricot, les fibres constituant le tricot glissant les unes par rapport aux autres dans le réseau maillé. De manière générale, le taux d'allongement élastique du tricot biélastique selon l'invention est d'au moins 10% dans au moins une des deux directions d'allongement. II est avantageusement de 50% ou plus, voire plus particulièrement de 100% ou plus. Ces propriétés s'entendent avant la mise en oeuvre du tricot dans le pneumatique selon l'invention.

Le sens de pose du tricot biélastique sur les zones à protéger est avantageusement tel que la direction du tricot ayant le taux d'allongement le plus important est parallèle à la direction de la contrainte la plus élevée agissant sur ladite zone.

D'autres caractéristiques et avantages de l'invention apparaîtront à la lecture d'un exemple de réalisation d'un pneumatique conforme à l'invention, en référence aux figures en annexe, dans lesquelles :

-la figure 1 représente une coupe transversale d'une moitié d'un pneumatique, avec un flanc et une portion du sommet, avec un premier exemple de positionnement d'un élément de renfort bi-élastique ;

-la figure 2 représente une coupe similaire à celle de la figure 1, avec un second exemple de positionnement d'un élément de renfort bi-élastique.

Dans le présent document, on entend par « axiale » une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique.

Le terme « structure de renfort de sommet » est utilisé dans le texte. De manière usuelle, cet élément est souvent désigné par le terme « armature de sommet ».

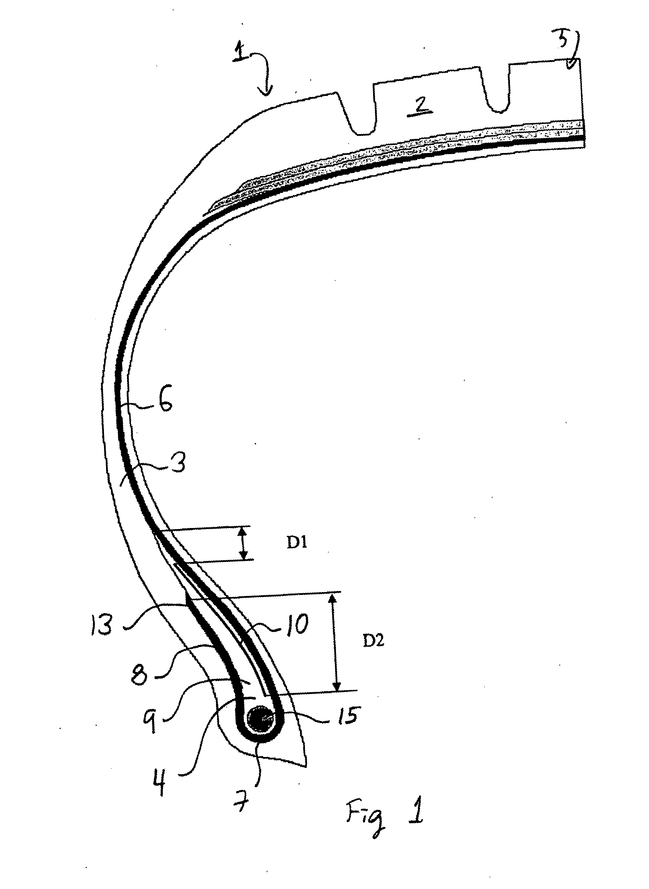

La figure 1 représente de manière schématique une demie coupe radiale d'un pneumatique 1 à armature de carcasse. Ce pneumatique 1 comporte un sommet 2, des flancs 3, des bourrelets 4, une structure de renfort de type carcasse 6 s'étendant de préférence d'un bourrelet à l'autre. Le sommet 2 est surmonté d'une bande de roulement 5. Les structures de renfort 6 sont ancrées dans le bourrelet de façon classique, par enroulement autour d'une tringle 15. Un tel type d'ancrage comporte un retournement de ladite structure de renfort de type carcasse 6 autour d'une tringle 15 de façon à former, le long d'une portion radialement intérieure de la tringle, une portion de retournement 7 de la structure de renfort depuis un point axialement intérieur à la tringle vers un point axialement extérieur à celle-ci puis s'étendant radialement extérieurement depuis la base de ladite tringle de façon à former une section retournée 8 se terminant par une extrémité 13.

Au moins un élément de renfort biélastique 10 est disposé à proximité de ladite structure de renfort de type carcasse. A la figure 1, l'élément 10 est positionné, d'une part axialement extérieurement à la structure de renfort 6, et d'autre part, dans la portion radialement intérieure du flanc, au niveau du bourrelet 4.

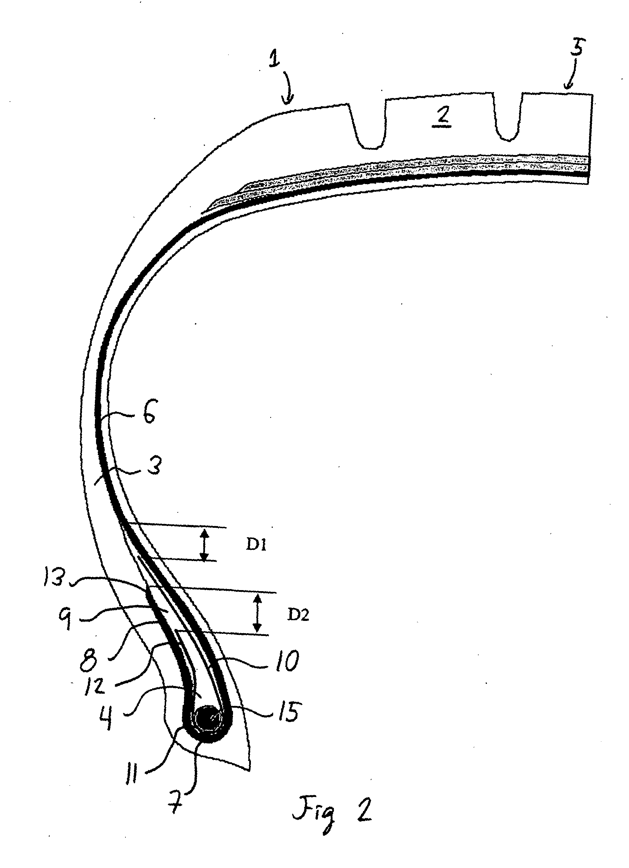

La boucle quasi-fermée formée par le retournement de la structure de renfort de type carcasse 6 autour de la tringle 15 est de préférence remplie d'un matériau caoutchoutique de remplissage 9, dont le module est plus élevé que celui du matériau occupant la portion externe de cette même boucle. Cette zone de remplissage est définie radialement intérieurement par la tringle 15, latéralement par les deux portions axialement interne et externe de structure de renfort de type carcasse, et radialement extérieurement par l'extrémité 13 de la section retournée 8 de la section retournée de structure de renfort de type carcasse. Dans les exemples des figures 1 et 2, la zone de remplissage va au-delà de l'extrémité 13 en reliant ce dernier à un point radialement extérieur de la structure de renfort 6. L'élément de renfort biélastique 10 est de préférence situé dans cette zone de remplissage 9. De manière encore plus préférentielle, l'élément 10 est entièrement logé dans cette zone 9. Dans l'exemple de la figure 1, l'extrémité radialement externe de l'élément de renfort 10 se situe à une distance minimale de 5 mm (distance D1) par rapport à l'extrémité radialement externe de la zone de remplissage 9.
L'élément de renfort biélastique 10 s'étend radialement intérieurement, depuis l'extrémité 13, sur au moins la moitié de la distance radiale séparant ledit point 13 de la portion radialement extérieure de la tringle 15. Selon d'autre variantes avantageuses de réalisation, l'élément de renfort biélastique 10 s'étend radialement intérieurement, depuis le point 13, sur au moins 70 %, et de manière encore plus préférentielle, sur plus de 85 %, de la distance radiale séparant ledit point 13 de la portion radialement extérieure de la tringle 15.

La figure 2 illustre un autre exemple de réalisation dans lequel la disposition de l'élément de renfort diffère du premier exemple.

En effet, dans l'exemple de la figure 2, l'élément de renfort biélastique 10 se prolonge radialement intérieurement de façon à former, le long d'une portion radialement intérieure de la tringle 15, une portion de retournement 11 de l'élément de renfort biélastique, depuis un point axialement intérieur à la tringle vers un point axialement extérieur à celle-ci puis s'étendant radialement extérieurement depuis la base de ladite tringle 15 jusqu'à une position radiale inférieure ou égale à celle de l'extrémité 13 de la section retournée 8 de structure de renfort de type carcasse, formant ainsi une portion retournée 12 de l'élément de renfort biélastique.

L'extrémité de la portion retournée 12 est située dans la zone de remplissage 9. Cette extrémité est de préférence située à une distance D3 supérieure ou égale à 5 mm par rapport à l'extrémité 13 de la section retournée 8 de la structure de renfort de type carcasse.

L'élément de renfort 10 est avantageusement constitué d'un tricot élastique de faible densité apparente et très déformable. Ceci permet une élasticité par glissement des fils et déformation des mailles. II permet dans une certaine mesure un découplage mécanique entre les différents composants architecturaux entre lesquelles il s'interpose. Par ailleurs, l'avantage d'un tricot élastique est clairement d'avoir suffisamment de souplesse de structure pour suivre les déformations du pneumatique. On pourra ainsi choisir différentes natures de matériau pour former ce tricot élastique : son épaisseur, son taux de vide et sa densité sont directement liés à ce choix et à la structure du tricot (diamètre du fil, nombre de mailles au dm et serrage).

Le tissu biélastique présente au moins l'une et de préférence l'ensemble des caractéristiques suivantes :
- un taux d'allongement élastique d'au moins 8%,
- une taille de maille inférieure ou égale à 150 mailles par décimètres, et de préférence 200 mailles par décimètres.

Par exemple, des essais effectués avec un tricot comportant 240 mailles par décimètre d'un côté, et 235 mailles par décimètre de l'autre côté, ont permis l'obtention de résultats fort intéressants, notamment en terme de résistance à la fissuration.

De manière générale, le tricot biélastique selon l'invention est constitué de fibres synthétiques, de fibres naturelles ou d'un mélange de ces fibres. A titre de fibres synthétiques, le tricot biélastique selon l'invention peut comprendre au moins un type de fibres choisi parmi le polyamide 6, le polyamide 6,6 (nylon), les polyesters, etc.

Ainsi, de manière avantageuse, ledit tissu comprend au moins un matériau choisi parmi les polyamides, les polyesters, la rayonne, le coton, la laine, l'aramide, la soie, le lin.

Selon une variante de réalisation avantageuse, une certaine proportion de fils élastiques tels qu'en polyuréthane, latex, caoutchouc naturel ou synthétique peut s'avérer utile afin d'assurer le rappel élastique, ce qui permet de faciliter la mise en oeuvre du tissu. Ainsi, à titre de tricot biélastique selon l'invention, on peut citer le tricot commercialisé par Milliken sous la référence 2700 composé de 82% de fibre de polyamide 6 et de 18% de polyuréthane de 44 dTex.

Le tissu ou tricot biélastique selon l'invention présente une épaisseur pouvant se situer entre 0,2 mm et 2 mm, et de préférence entre 0,4 et 1,2 mm.

Sa masse surfacique est généralement située entre 70 et 700 g/m2, et de préférence entre 140 et 410 g/m2.

Selon une variante de réalisation, le tricot biélastique est composée d'au moins un polymère choisi parmi les polymères thermodurcissable, les polymères thermoplastiques.

De manière préférentielle, le tricot élastique pourra présenter une masse volumique d'au moins 0,02 g/cm3, mesurée de manière classique, cette masse volumique pouvant aller jusqu'à 0,50 g/cm3.

Une autre caractéristique du tricot élastique utilisable dans le cadre de l'invention est son taux de vide. De manière générale selon l'invention, le taux de vide sera avantageusement d'au moins 40 % pour que le tricot soit suffisamment compressible. Ce taux de vide peut-être calculé en comparant la masse volumique du tricot avec celle du matériau compact constituant sa matrice, mesurée par tout moyen classique.

Parmi les matériaux non élastomériques pouvant constituer la matrice de ces tricots, on peut citer :
- les fibres textiles naturelles, comme le coton, la laine, le lin, le chanvre, la soie, etc.
- les fibres textiles artificielles comme la rayonne;
- des fibres textiles synthétiques par exemple en polyesters, polyamides, aramides, polychlorure de vinyle, polyoléfines etc.
- des fibres minérales par exemple en verre, silice, ou laine de roche.

Parmi les matériaux élastomériques, on peut citer le caoutchouc naturel, le polybutadiène, le SBR, le polyuréthane, etc.

## Revendications

1. Pneumatique comprenant au moins une structure de renfort (6) de type carcasse s'étendant circonférentiellement depuis le bourrelet (4) vers ledit flanc (3), ancrée de chaque côté du pneumatique dans un bourrelet dont la base est destinée à être montée sur un siège de jante, ledit ancrage comportant un retournement de ladite structure de renfort de type carcasse autour d'une tringle (15) de façon à former, le long d'une portion radialement intérieure de la tringle, une portion de retournement (7) de la structure de renfort depuis un point axialement intérieur à la tringle vers un point axialement extérieur à celle-ci puis s'étendant radialement extérieurement depuis la base de ladite tringle de façon à former une section retournée (8) se terminant par une extrémité (13), chaque bourrelet (4) se prolongeant radialement vers l'extérieur par un flanc (3), les flancs rejoignant radialement vers l'extérieur une bande de roulement (5), ledit pneumatique comportant par ailleurs au moins un élément de renfort biélastique (10) circonférentiel étant constituée d'un tissus biélastique dans lequel ledit tissu utilisé est un tricot biélastique, soit un tissu à mailles dont les boucles formant les mailles sont susceptibles de se déplacer les unes par rapport aux autres dans le sens du tricotage et dans le sens perpendiculaire au tricotage, **caractérisé en ce que** ledit au moins un élément de renfort biélastique (10) est agencé de façon à s'étendre sensiblement parallèlement le long d'une portion de la structure de renfort (6) située dans la zone du bourrelet (4) du pneumatique, axialement extérieurement à la structure de renfort, à proximité immédiate de celle-ci.

2. Pneumatique selon la revendication 1, dans lequel ledit renfort biélastique (10) s'étend radialement intérieurement, depuis une position radiale correspondant à celle de l'extrémité (13) de la section retournée (8) de la structure de renfort, sur plus de la moitié de la distance radiale séparant ladite extrémité (13) de la portion radialement extérieure de la tringle (15).

3. Pneumatique selon la revendication 1, dans lequel ledit renfort biélastique (10) s'étend radialement intérieurement, depuis une position radiale correspondant à celle de l'extrémité (13) de la section retournée (8) de la structure de renfort sur plus de 70 % et de préférence plus de 85 % de la distance radiale séparant ladite extrémité (13) de la portion radialement extérieure de la tringle(15).

4. Pneumatique selon l'une des revendications précédentes, dans lequel la portion du bourrelet (4) comprise entre les deux sections concourantes de structures de renfort forme une zone de remplissage (9) occupée par un matériau caoutchoutique de remplissage dans lequel la totalité de l'élément de renfort biélastique (10) est logé.

5. Pneumatique selon l'une des revendications précédentes, dans lequel ledit élément de renfort biélastique (10) se prolonge radialement intérieurement de façon à former, le long d'une portion radialement intérieure de la tringle, une portion de retournement (7) de l'élément de renfort biélastique, depuis un point axialement intérieur à la tringle (15) vers un point axialement extérieur à celle-ci puis s'étendant radialement extérieurement depuis la base de ladite tringle jusqu'à une position radiale inférieure ou égale à celle de l'extrémité (13) de la section retournée (8) de structure de renfort.

6. Pneumatique selon l'une des revendications 4 ou 5, dans lequel l'extrémité de l'élément de renfort biélastique (10) situé du côté de la section retournée (8) de la structure de renfort de type carcasse est située dans la zone de remplissage (9).

7. Pneumatique selon l'une des revendications 5 ou 6, dans lequel la zone de remplissage (9) s'étend radialement extérieurement au-delà de l'extrémité (13) de la section retournée de structure de renfort.

8. Pneumatique selon l'une des revendications précédentes, dans lequel l'élément de renfort biélastique (10) présente au moins l'une et de préférence l'ensemble des caractéristiques suivantes :
- un taux d'allongement élastique d'au moins 8%,
- une taille de maille inférieure ou égale à 150 mailles par décimètres, et de préférence 200 mailles par décimètres.

9. Pneumatique selon l'une des revendications précédentes, dans lequel ledit élément de renfort biélastique (10) comprend au moins un matériau choisi parmi les polyamides, les polyesters, la rayonne, le coton, la laine, l'aramide, la soie, le lin.

10. Pneumatique selon l'une des revendications précédentes, dans lequel l'élément de renfort biélastique (10) comprend une certaine proportion de fils élastiques.

11. Pneumatique selon l'une des revendications précédentes, dans lequel l'élément de renfort biélastique (10) présente une épaisseur pouvant se situer entre 0,2 mm et 2 mm, et de préférence entre 0,4 et 1,2 mm.

12. Pneumatique selon l'une des revendications précédentes, dans lequel l'élément de renfort biélastique (10) présente une masse surfacique généralement située entre 70 et 700 g/m2, et de préférence entre 140 et 410 g/m2.

13. Pneumatique selon l'une des revendications précédentes, dans lequel l'élément de renfort biélastique (10) est composée d'au moins un polymère choisi parmi les polymères thermodurcissable, les polymères thermoplastiques.

## Claims

1. Tyre comprising at least one carcass-type reinforcing structure extending circumferentially from the bead (4) to said sidewall (3) and anchored on each side of the tyre in a bead, the base of which latter is designed to be mounted on a wheel rim seat, said anchoring comprising a turning up of said carcass-type reinforcing structure around a bead core (15) in such a way as to form, along a radially inward portion of the bead core, a turning-up portion (7) of the reinforcing structure from a point axially inside the bead core to a point axially outside the bead core, and then extending radially outwardly from the base of said bead core in such a way as to form a turned-up section (8) ending in an end (13), each bead (4) being continued radially outwardly by a sidewall (3), the sidewalls meeting, in the radially outward direction, a tread (5), said tyre also comprising at least one circumferential bielastic reinforcing element (10) made of a bielastic fabric, in which the fabric employed is a bielastic knitted fabric, that is a stitched fabric, the loops forming the stitches of which are capable of moving relative to each other in the knitting direction and in the direction perpendicular to the knitting, said at least one bielastic reinforcing element (10) being arranged so as to extend substantially parallel along a portion of the reinforcing structure (6) which is situated in that region of the bead (4) of the tyre that is axially outward relative to the reinforcing structure, in the immediate vicinity of the latter.

2. Tyre according to Claim 1, in which said bielastic reinforcement (10) extends radially inwardly, from a radial position corresponding to the position of the end (13) of the turned-up section (8) of the reinforcing structure, over more than half of the radial distance between said end (13) and the radially outward portion of the bead core (15).

3. Tyre according to Claim 1, in which said bielastic reinforcement (10) extends radially inwardly, from a radial position corresponding to the position of the end (13) of the turned-up section (8) of the reinforcing structure, over more than 70% and preferably more than 85% of the radial distance between said end (13) and the radially outward portion of the bead core (15).

4. Tyre according to one of the preceding claims, in which that portion of the bead (4) which lies between the two converging sections of reinforcing structures forms a filler region (9) occupied by a rubber filler material in which the whole of the bielastic reinforcing element (10) is contained.

5. Tyre according to one of the preceding claims, in which said bielastic reinforcing element (10) is continued radially inwardly in such a way as to form, along a radially inward portion of the bead core, a turning-up portion (7) of the bielastic reinforcing element, from a point axially inside the bead core (15) to a point axially outside the latter, and then extending radially outwardly from the base of said bead core to a radial position less than or equal to that of the end (13) of the turned-up section (8) of the reinforcing structure.

6. Tyre according to either of Claims 4 and 5, in which that end of the bielastic reinforcing element (10) which is situated towards the turned-up section (8) of the carcass-type reinforcing structure is situated in the filler region (9).

7. Tyre according to either of Claims 5 and 6, in which the filler region (9) extends radially outwardly past the end (13) of the turned-up section of the reinforcing structure.

8. Tyre according to one of the preceding claims, in which the bielastic reinforcing element (10) has at least one and preferably all of the following properties:
- an elastic elongation ratio of at least 8%, and
- a stitch size of less than or equal to 150 stitches per decimetre, and preferably 200 stitches per decimetre.

9. Tyre according to one of the preceding claims, in which said bielastic reinforcing element (10) comprises at least one material selected from polyamides, polyesters, rayon, cotton, wool, aramid, silk and flax.

10. Tyre according to one of the preceding claims, in which the bielastic reinforcing element (10) comprises a certain proportion of elastic threads.

11. Tyre according to one of the preceding claims, in which the bielastic reinforcing element (10) has a thickness between 0.2 mm and 2 mm, and preferably between 0.4 and 1.2 mm.

12. Tyre according to one of the preceding claims, in which the bielastic reinforcing element (10) has a mass per unit area of generally between 70 and 700 g/m², and preferably between 140 and 410 g/m².

13. Tyre according to one of the preceding claims, in which the bielastic reinforcing element (10) is composed of at least one polymer selected from thermosetting polymers and thermoplastic polymers.

## Patentansprüche

1. Luftreifen, der mindestens eine Verstärkungsstruktur (6) vom Typ Karkasse enthält, die sich in Umfangsrichtung vom Wulst (4) zur Flanke (3) erstreckt, auf jeder Seite des Luftreifens in einem Wulst verankert ist, dessen Basis dazu bestimmt ist, auf einen Felgensitz montiert zu werden, wobei die Verankerung einen Umschlag der Verstärkungsstruktur vom Typ Karkasse um einen Wulstkern (15) aufweist, um entlang eines radial inneren Teils des Wulstkerns einen Umschlagteil (7) der Verstärkungsstruktur ausgehend von einem bezüglich des Wulstkerns axial inneren Punkt zu einem Punkt axial außerhalb von diesem und sich dann ausgehend von der Basis des Wulstkerns radial außen erstreckend zu bilden, um einen umgeschlagenen Abschnitt (8) zu bilden, der in einem Ende (13) endet, wobei jeder Wulst (4) sich radial nach außen durch eine Flanke (3) verlängert, wobei die Flanken radial nach außen an einen Laufstreifen (5) anschließen, wobei der Luftreifen außerdem mindestens ein bielastisches Umfangsverstärkungselement (10) aufweist, das aus einem bielastischen Gewebe besteht, wobei das verwendete Gewebe ein bielastisches Gestrick, d.h. ein Gewebe mit Maschen ist, dessen die Maschen formenden Schlaufen sich zueinander in Strickrichtung und lotrecht zur Strickrichtung verschieben können, **dadurch gekennzeichnet, dass** das mindestens eine bielastische Verstärkungselement (10) so angeordnet ist, dass es sich im Wesentlichen parallel entlang eines Teils der in der Zone des Wulsts (4) des Luftreifens befindlichen Verstärkungsstruktur (6) axial außerhalb der Verstärkungsstruktur in deren direkter Nähe erstreckt.

2. Luftreifen nach Anspruch 1, bei dem die bielastische Verstärkung (10) sich radial innen ausgehend von einer radialen Stellung entsprechend derjenigen des Endes (13) des umgeschlagenen Abschnitts (8) der Verstärkungsstruktur über mehr als die Hälfte des radialen Abstands erstreckt, der das Ende (13) vom radial äußeren Teil des Wulstkerns (15) trennt.

3. Luftreifen nach Anspruch 1, bei dem die bielastische Verstärkung (10) sich radial innen ausgehend von einer radialen Stellung entsprechend derjenigen des Endes (13) des umgeschlagenen Abschnitts (8) der Verstärkungsstruktur über mehr als 70 % und vorzugsweise mehr als 85 % des radialen Abstands erstreckt, der das Ende (13) vom radial äußeren Teil des Wulstkerns(15) trennt.

4. Luftreifen nach einem der vorhergehenden Ansprüche, bei dem der Teil des Wulsts (4), der zwischen den zwei konvergenten Abschnitten von Verstärkungsstrukturen enthalten ist, eine Füllzone (9) bildet, die von einem Kautschuk-Füllmaterial eingenommen wird, in dem die Gesamtheit des bielastischen Verstärkungselements (10) angeordnet ist.

5. Luftreifen nach einem der vorhergehenden Ansprüche, bei dem das bielastische Verstärkungselement (10) sich radial innen so verlängert, dass es entlang eines radial inneren Teils des Wulstkerns einen Umschlagteil (11) des bielastischen Verstärkungselements ausgehend von einem bezüglich des Wulstkerns (15) axial inneren Punkt zu einem Punkt axial außerhalb von diesem bildet und sich dann radial außen ausgehend von der Basis des Wulstkerns bis zu einer radialen Stellung erstreckt, die unterhalb oder gleich derjenigen des Endes (13) des umgeschlagenen Abschnitts (8) der Verstärkungsstruktur ist.

6. Luftreifen nach einem der Ansprüche 4 oder 5, bei dem das Ende des bielastischen Verstärkungselements (10), das sich auf der Seite des umgeschlagenen Abschnitts (8) der Verstärkungsstruktur vom Typ Karkasse befindet, sich in der Füllzone (9) befindet.

7. Luftreifen nach einem der Ansprüche 5 oder 6, bei dem die Füllzone (9) sich radial außen über das Ende (13) des umgeschlagenen Abschnitts der Verstärkungsstruktur hinaus erstreckt.

8. Luftreifen nach einem der vorhergehenden Ansprüche, bei dem das bielastische Verstärkungselement (10) mindestens eine und vorzugsweise alle folgenden Eigenschaften aufweist:
- einen elastischen Dehnungsgrad von mindestens 8 %,
- eine Maschengröße geringer als oder gleich 150 Maschen pro Dezimeter, und vorzugsweise 200 Maschen pro Dezimeter.

9. Luftreifen nach einem der vorhergehenden Ansprüche, bei dem das bielastische Verstärkungselement (10) mindestens ein Material enthält, das ausgewählt wird unter den Polyamiden, den Polyestern, Rayon, Baumwolle, Wolle, Aramid, Seide, Flachs.

10. Luftreifen nach einem der vorhergehenden Ansprüche, bei dem das bielastische Verstärkungselement (10) einen bestimmten Anteil an elastischen Fäden enthält.

11. Luftreifen nach einem der vorhergehenden Ansprüche, bei dem das bielastische Verstärkungselement (10) eine Dicke aufweist, die zwischen 0,2 mm und 2 mm, und vorzugsweise zwischen 0,4 und 1,2 mm liegen kann.

12. Luftreifen nach einem der vorhergehenden Ansprüche, bei dem das bielastische Verstärkungselement (10) eine flächenbezogene Masse aufweist, die allgemein zwischen 70 und 700 g/m², und vorzugsweise zwischen 140 und 410 g/m² liegt.

13. Luftreifen nach einem der vorhergehenden Ansprüche, bei dem das bielastische Verstärkungselement (10) aus mindestens einem Polymer besteht, das aus den wärmehärtbaren Polymeren und den thermoplastischen Polymeren ausgewählt wird.
